# EUROPÄISCHE PATENTSCHRIFT

(11) **EP 2 151 342 B1**
(45) Veröffentlichungstag und Bekanntmachung des Hinweises auf die Patenterteilung: **02.01.2013**
(21) Anmeldenummer: 09008646.3
(22) Anmeldetag: 02.07.2009
(51) Int. Cl.: B60J 7/14

(54) **Cabriolet-Fahrzeug mit mehreren Dachsegmenten**
Convertible vehicle with multiple roof segments
Véhicule cabriolet doté de plusieurs segments de toit

(30) Priorität: 05.07.2008 DE 102008031838
(43) Veröffentlichungstag der Anmeldung: 10.02.2010
(73) Patentinhaber: Wilhelm Karmann GmbH, 49084 Osnabrück (DE)
(72) Erfinder: Meinert, Stefan, 49143 Wallenhorst (DE)
(74) Vertreter: Kronthaler, Schmidt & Coll.

(56) Entgegenhaltungen:
- EP-A- 1 243 454
- EP-A1- 1 384 614
- WO-A1-03/029037
- WO-A1-2005/077693
- DE-A1-102004 035 372
- DE-U1- 29 601 330

## Beschreibung

Die Erfindung betrifft ein Cabriolet-Fahrzeug mit einem beweglichen Dach, das mehrere im geschlossenen Zustand hintereinander folgende und an zumindest einer Querfuge voneinander geteilte Dachsegmente umfasst, nach dem Oberbegriff des Anspruchs 1.

Es sind Cabriolet-Fahrzeuge mit sog. Retractable Hardtops (RHTs), also Dächern mit mehreren in sich starren Dachsegmenten bekannt, die bei geschlossenem Dach aufeinander folgen. Ein solches Fahrzeug ist beispielsweise in der DE 44 45 580 A1 gezeigt. Dabei kann das Dach nur als Ganzes geöffnet oder geschlossen werden und benötigt daher groß dimensionierte seitliche Antriebe zu seiner Bewegung. Diese haben dadurch selbst einen hohen Raumbedarf und erfordern dadurch neben den ohnehin schon breiten Dachsegmenten eine zusätzliche Breite im Bereich des Fahrzeughecks. Dieses ist für das Fahrzeugdesign ungünstig. Zudem wird der verbleibende Kofferraum stark eingeschränkt.

Aus der EP 1 243 454 A1 ist ein Cabriolet-Fahrzeug mit einem Hardtop-Fahrzeugdach bekannt, welches längsgeteilt ist und aus zwei in sich starren Dachteilen besteht. Die Dachteile erstrecken sich beidseitig einer Längs-Trennachse, welche parallel zur Fahrzeuglängsachse verläuft. Zur Verlagerung der Dachteile ist eine Stellkinematik vorgesehen, mittels welcher die Dachteile in Richtung eines Stauraums verstellt werden können. Die Dachteile werden hierbei um eine räumliche Achse verschwenkt.

Der Erfindung liegt die Aufgabe zugrunde, ein Cabriolet-Fahrzeug mit einem beweglichen Dach, das zumindest ein in Fahrzeuglängsrichtung geteiltes Dachsegment umfasst, zu schaffen, wobei die Dachsegmente über eine konstruktiv einfach ausgebildete Öffnungskinematik ablegbar sind, und wobei mit der Öffnungskinematik ein kollisionsfreier Öffnungsablauf der beiden Dachteile sichergestellt werden kann.

Die Erfindung löst dieses Problem durch ein Cabriolet-Fahrzeug mit den Merkmalen des Anspruchs 1. Hinsichtlich vorteilhafter Ausgestaltungen der Erfindung wird auf die weiteren Ansprüche 1 bis 11 verwiesen.

Die Öffnungskinematik lässt sich dadurch konstruktiv einfach gestalten, dass ein Gestänge für zumindest einen Dachteil einen karosserieseitig schwenkbeweglich angebundenen Schwenkarm umfasst. Dieser benötigt nur eine Schwenkachse zu seiner Bewegung und kann fest mit dem jeweiligen Dachteil verbunden sein. Für eine Ablage mit einer Quereinwärtskomponente steht die Schwenkachse windschief zur Querachse der Karosserie. Trotz der überlagerten Heckwärts- und Quereinwärtsverlagerung ist dann nur ein Freiheitsgrad für ein solches Gestänge erforderlich.

Weiterhin kann durch eine entsprechende Steuerung der kollisionsfreie Öffnungsablauf beider Dachteile beispielsweise mit einem Vorlaufen eines Dachteils gegenüber dem anderen Dachteil sichergestellt werden.

In Ausbildung nach Anspruch 2 können die beiden Dachteile eines Dachsegments in ihrem Öffnungszustand den von dem jeweiligen geschlossenen Dachteil eingenommenen Raum vollständig und ohne Zurücklassen eines Längsträgers, einer Führungsschiene oder dergleichen vollständig freigeben, so dass mit Öffnung der Dachteile ein uneingeschränktes Cabriolet-Gefühl entsteht. Solche Gestänge, die die Dachteile halten, können dann zum Beispiel von schräg hinten nach vorne aufwärts an das jeweilige Dachteil herangeführt sein.

Auch die Kopffreiheit unter den geschlossenen Dachteilen bleibt auf diese Weise ohne jede Einschränkung.

Vorteilhaft kann das Dach mehrere im geschlossenen Zustand hintereinander folgende und an zumindest einer Querfuge voneinander geteilte Dachsegmente umfassen, so dass eines der Dachsegmente in einzelnen Dachteilen ablegbar ist und ein anderes Dachsegment zum Beispiel nach Art eines Deckels obenauf gelegt werden kann.

Die Gestängeteile können auf beiden Seiten etwa gleichgroß sein, wenn die Teilung ungefähr mittig liegt und beide Dachteile zumindest nahezu gleichgroß und gleichschwer sind.

Der für die Ablage benötigte Raum im Fahrzeugheck kann besonders schmal ausgebildet werden, wenn die Dachteile in ihrer geöffneten Stellung in Vertikalrichtung einander zumindest teilweise überlappend ablegbar sind.

Sofern die Dachteile ineinander geschachtelt ablegbar sind, kann auch beidseits der abgelegten Dachteile noch nutzbarer Kofferraum verbleiben. Zudem ist der Bedarf an Raumhöhe für das abgelegte Dach dann vermindert.

Wenn die Dachteile bei ihrer Öffnung um eine Vertikalachse um zumindest 20° einwärts schwenkbar sind, ist damit auch bei dem einfachen Aufbau mit einer Beweglichkeit nur um eine Achse für jedes Dachteil eine erhebliche Einwärtsverlagerbarkeit erreicht.

Mit einer insbesondere zwangsweisen Synchronisierung der Bewegungen beider Dachteile aufeinander ist es möglich, beide Dachteile von einem gemeinsamen Antrieb bewegen zu lassen, der über die Abstimmung der Bewegungen beider Dachteile deren Kollision auch dann verhindert, wenn deren Bewegungen gleichzeitig starten. So kann vom Antrieb aus für jede Seite eine unterschiedliche Getriebeübersetzung vorgesehen sein.

Eine zusätzliche Teilöffnungsmöglichkeit des Daches ist ermöglicht, wenn zumindest eines der Dachteile auch einzeln aufbeweglich ist. Dann kann beispielsweise das Dachteil über dem Fahrersitz geöffnet und über dem Beifahrersitz geschlossen sein.

Weitere Vorteile und Merkmale der Erfindung ergeben sich aus in der Zeichnung schematisch dargestellten und nachfolgend beschriebenen Ausführungsbeispielen des Gegenstandes der Erfindung.

In der Zeichnung zeigt:
- Fig. 1 bis Fig.7: eine nur schematische und nach vorne sowie zur rechten Seite abgebrochene Ansicht von schräg hinten eines erfindungsgemäßen Cabriolet-Fahrzeugs bei Öffnung beider Dachteile aus ihrer geschlossenen Stellung heraus, darin:
- Fig. 1: das Fahrzeug bei geschlossenen Dachteilen, die hier gemeinsam ein vorderes Dachsegment ausbilden,
- Fig. 2: das Fahrzeug nach Fig. 1 bei beginnender Öffnung der Dachteile in unterschiedlichen Geschwindig- keiten,
- Fig. 3: eine ähnliche Ansicht wie Fig. 2 bei weiter fort- schreitender Öffnung, wobei der linke Dachteil vorläuft,
- Fig. 4: eine ähnliche Ansicht wie Fig. 3 bei weiter fort- schreitender Öffnung mit Über-Kopf-Wenden und gleichzeitiger Quer-Einwärtsverlagerung der Dach- teile,
- Fig. 5: eine ähnliche Ansicht wie Fig. 4 bei weiter fort- schreitender Öffnung und Ineinanderschachtelung der Dachteile,
- Fig. 6: eine ähnliche Ansicht wie Fig. 5 bei weiter fort- schreitender Öffnung und Ineinanderschachtelung der Dachteile,
- Fig. 7: eine ähnliche Ansicht wie Fig. 6 in Endstellung der Öffnungsbewegung bei vollständig abgelegten und ineinander geschachtelten Dachteilen
- Fig. 8 bis Fig. 12: eine nur schematische und nach vorne abgebrochene Ansicht eines erfindungsgemäßen Cab- riolet-Fahrzeugs von oben bei Öffnung beider Dachteile entsprechend dem Ablauf nach den Figuren 1 bis 7 aus ihrer geschlossenen Stellung her- aus,
- Fig. 13 bis Fig. 18: eine nur schematische und nach vorne und unten abgebrochene Seitenansicht eines erfindungsgemäßen Cabriolet-Fahrzeugs bei Öffnung beider Dachteile entsprechend dem Ablauf nach den Figuren 1 bis 7 aus ihrer geschlossenen Stellung heraus, wobei ein bewegliches hinteres Dachseg- ment zusätzlich eingezeichnet ist, das bei geöff- neten Dachteilen selbst in eine Cabriolet- Stellung absenkbar ist, darin:

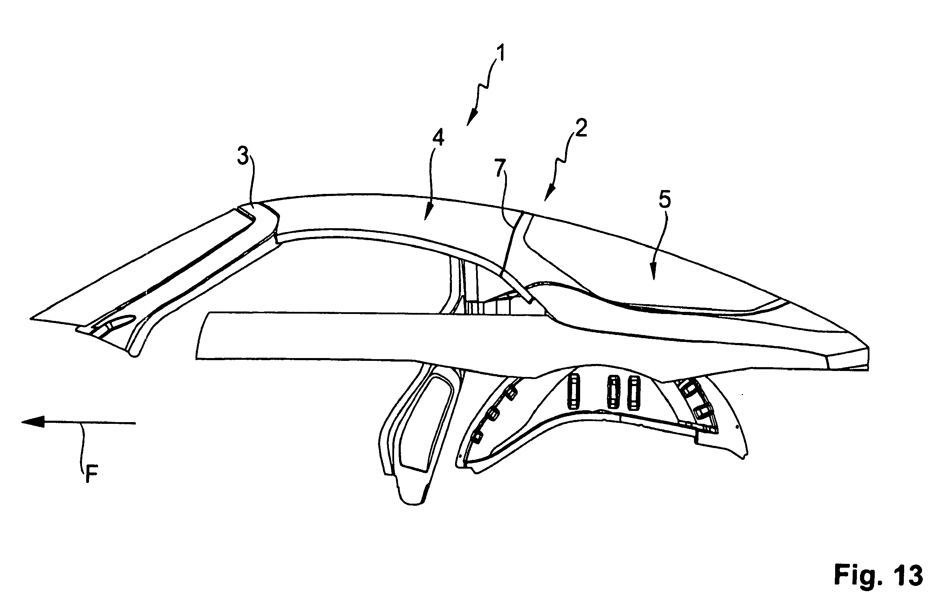

- Fig. 13: das Fahrzeug bei vollständig geschlossenem Dach,

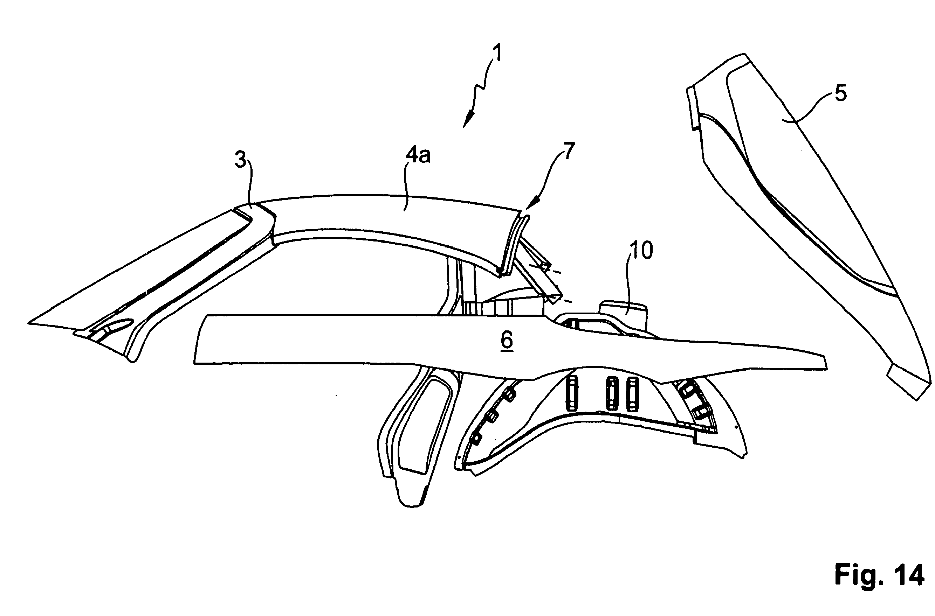

- Fig. 14: das Fahrzeug bei geöffnetem hinterem und noch geschlossenem vorderem Dachsegment,

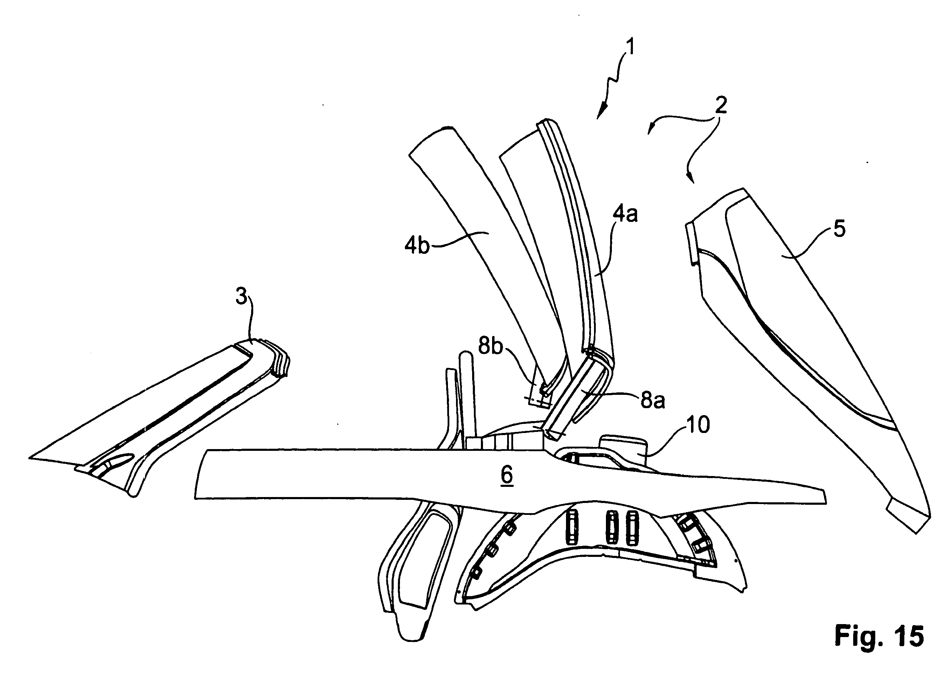

- Fig. 15: das Fahrzeug bei geöffnetem hinterem Dachsegment während der Öffnung der vorderen Dachteile,

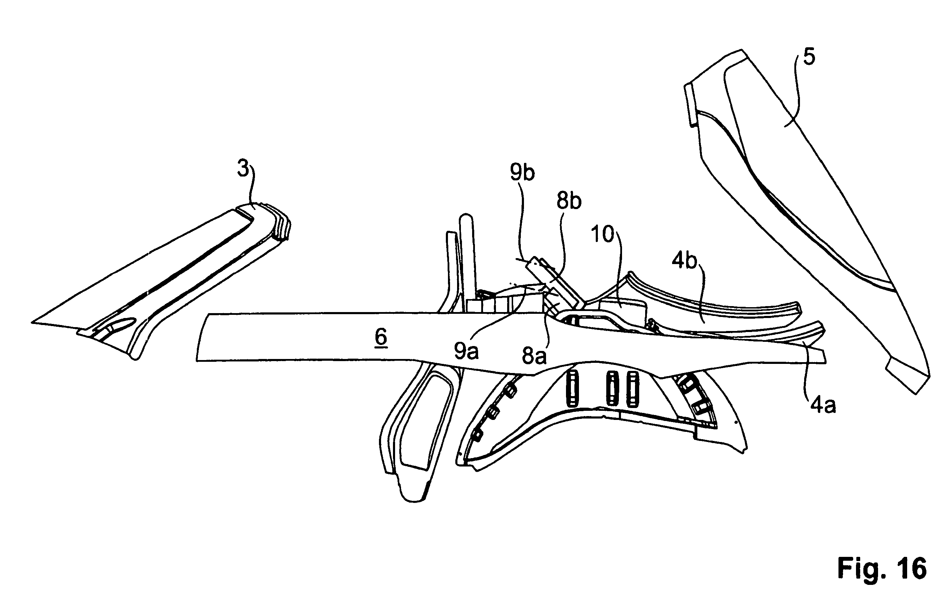

- Fig. 16: das Fahrzeug bei geöffnetem hinterem Dachsegment und in Offenstellung abgelegten vorderen Dachtei- len,

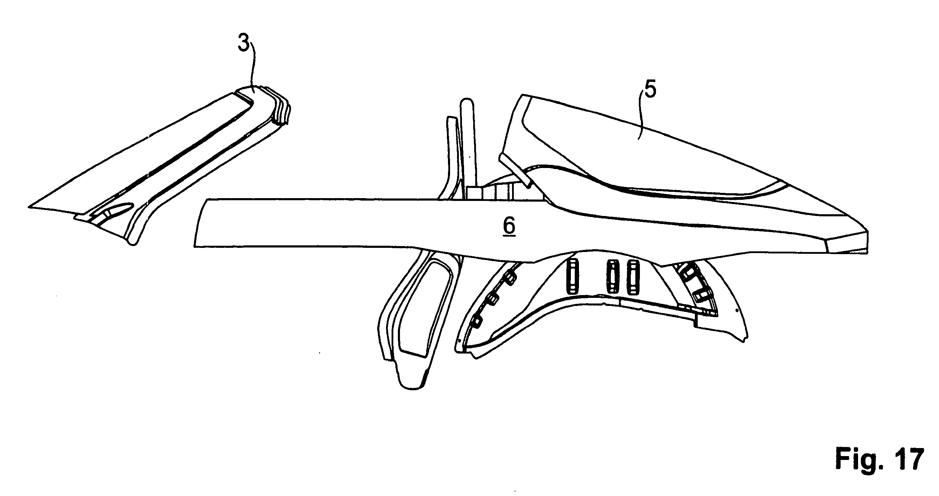

- Fig. 17: eine ähnliche Ansicht wie Fig. 16 bei wieder ge- schlossenem hinterem Dachsegment,

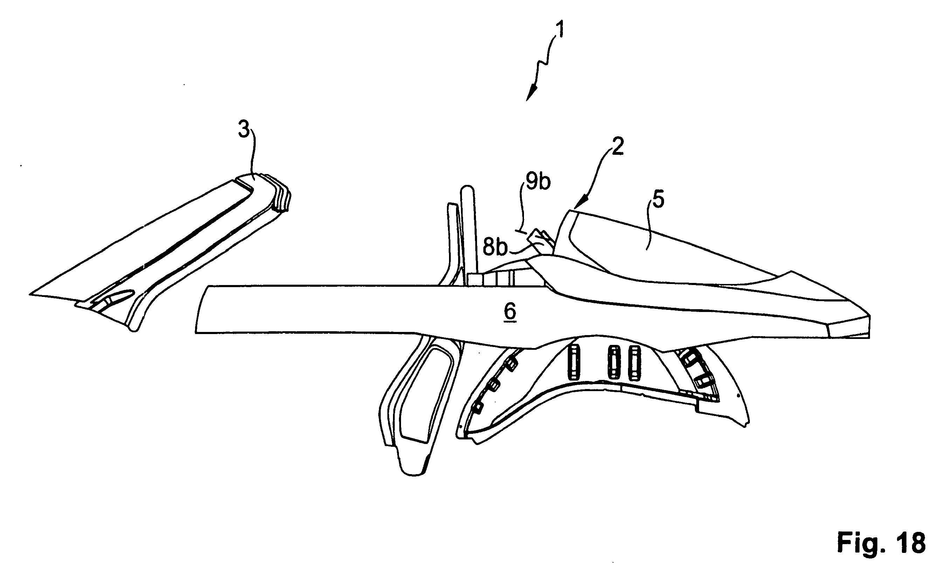

- Fig. 18: eine ähnliche Ansicht wie Fig. 17 bei zusätzlich in Cabriolet-Stellung abgesenktem hinterem Dach- segment,

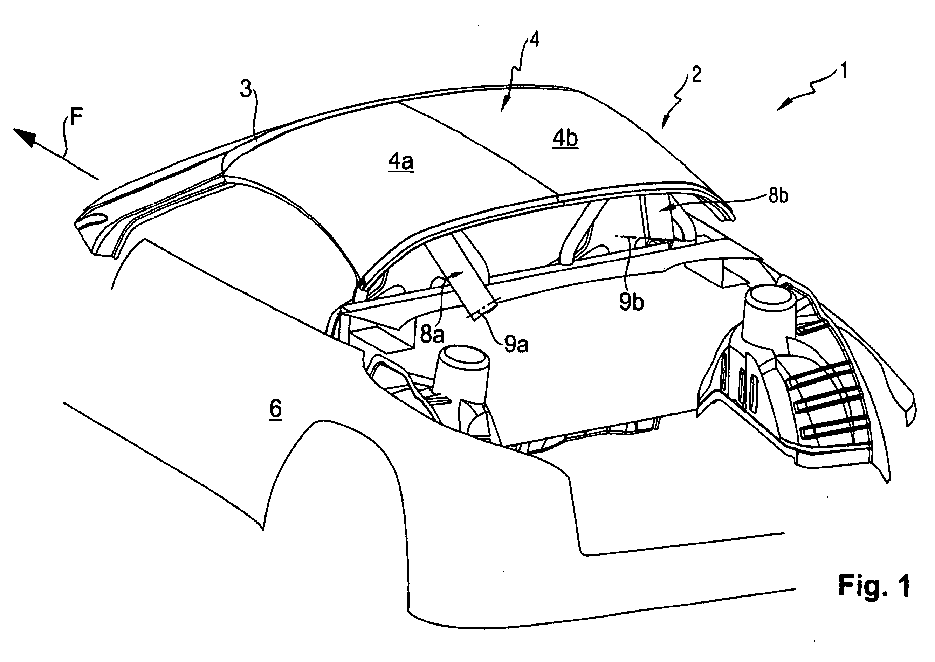

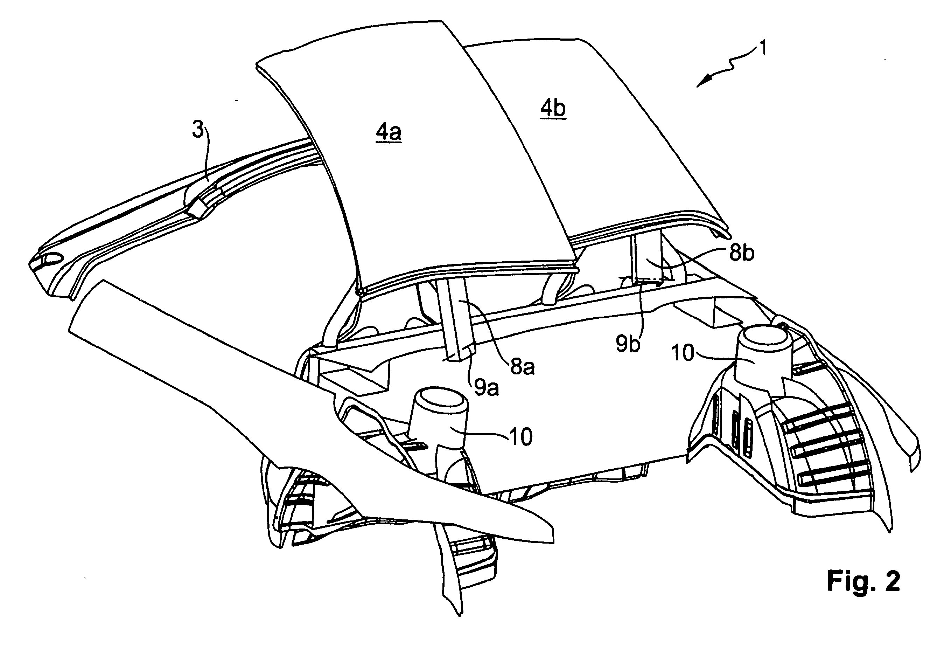

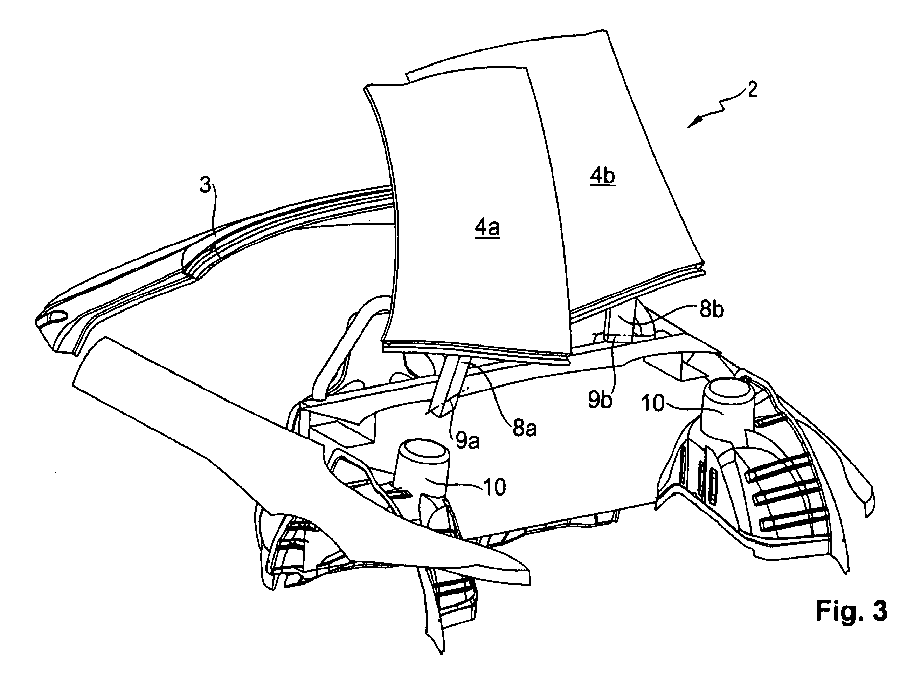

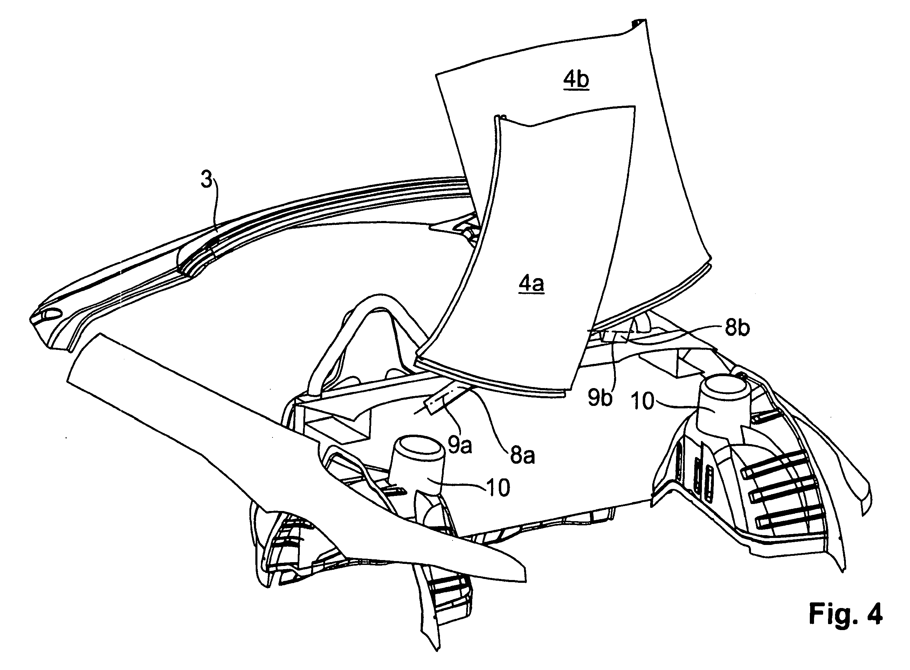

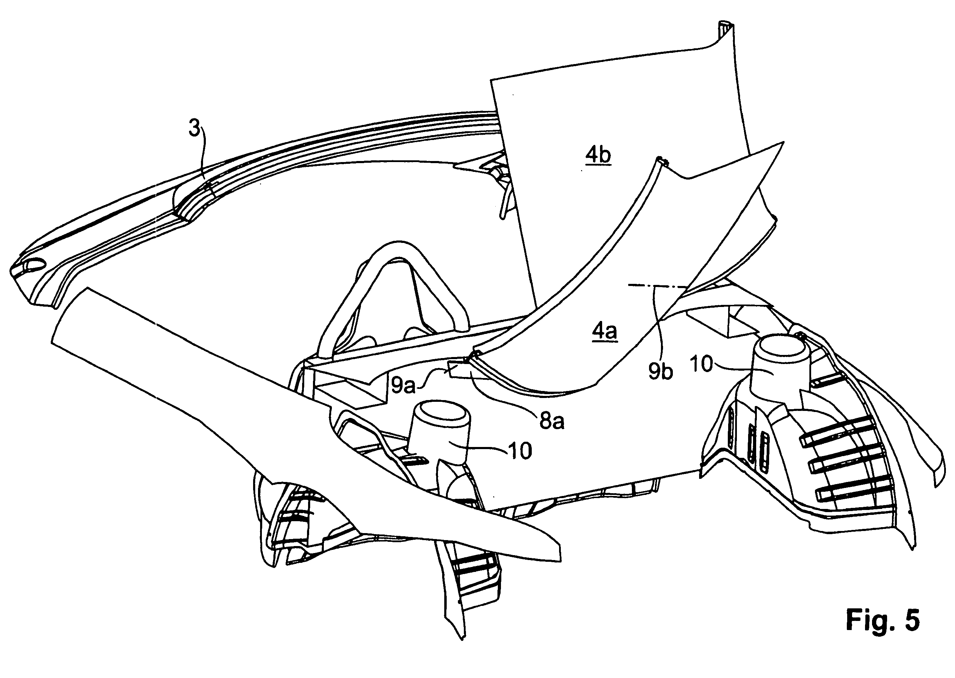

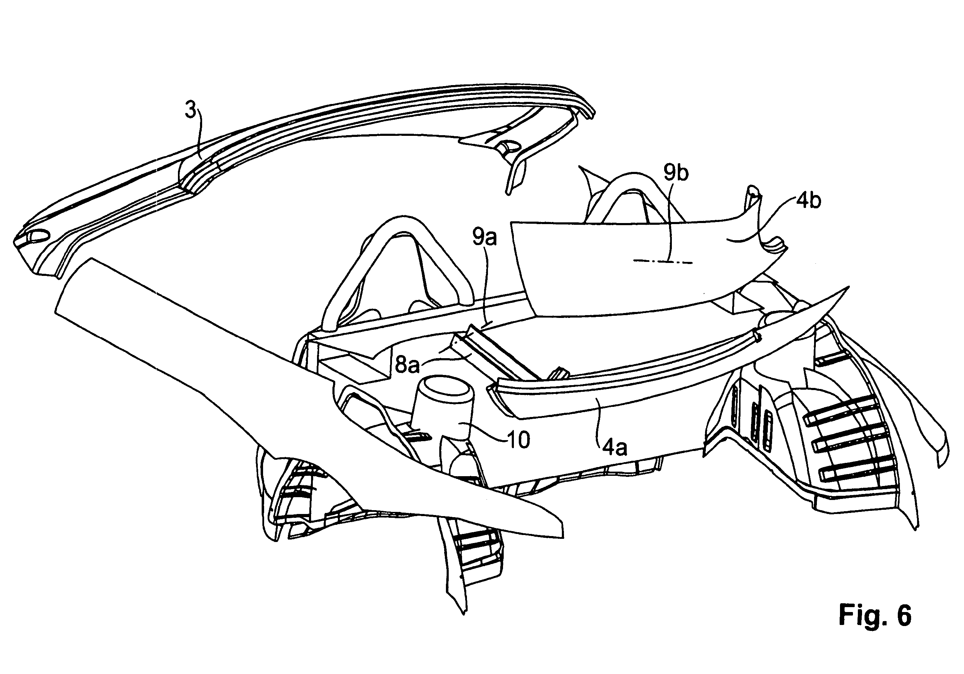

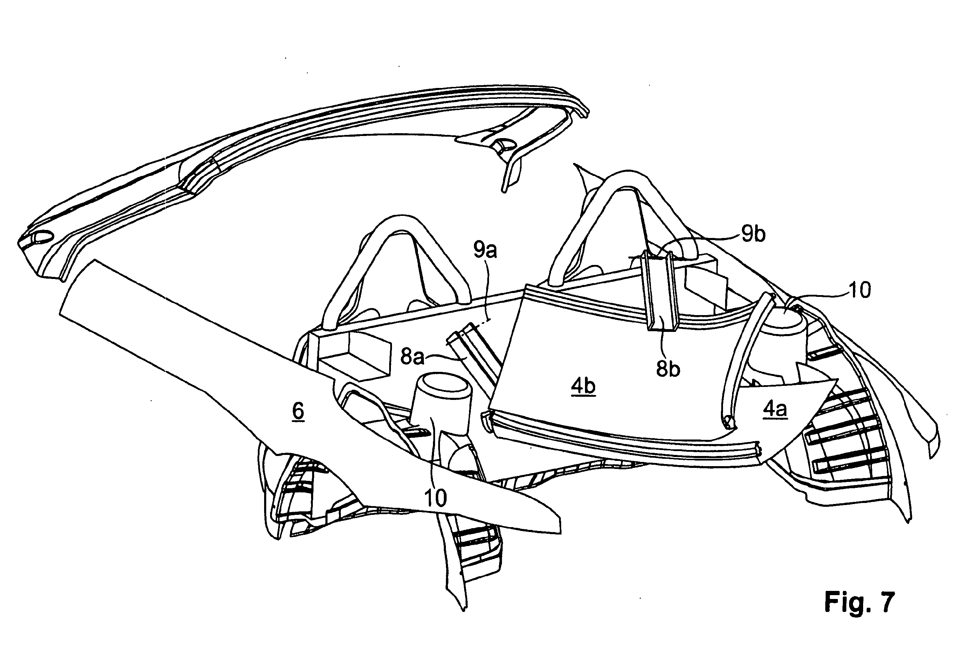

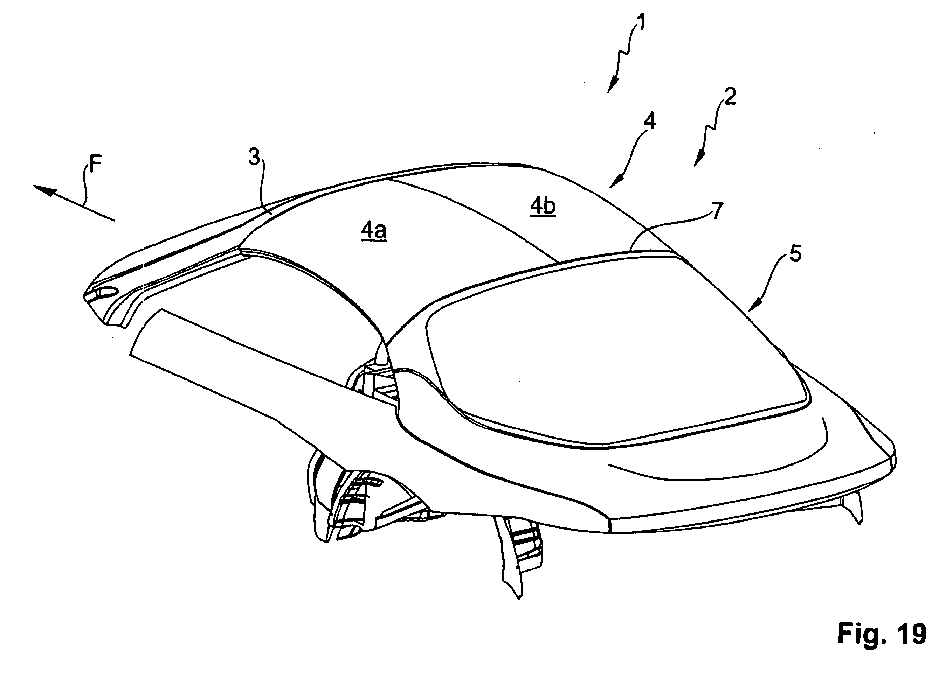

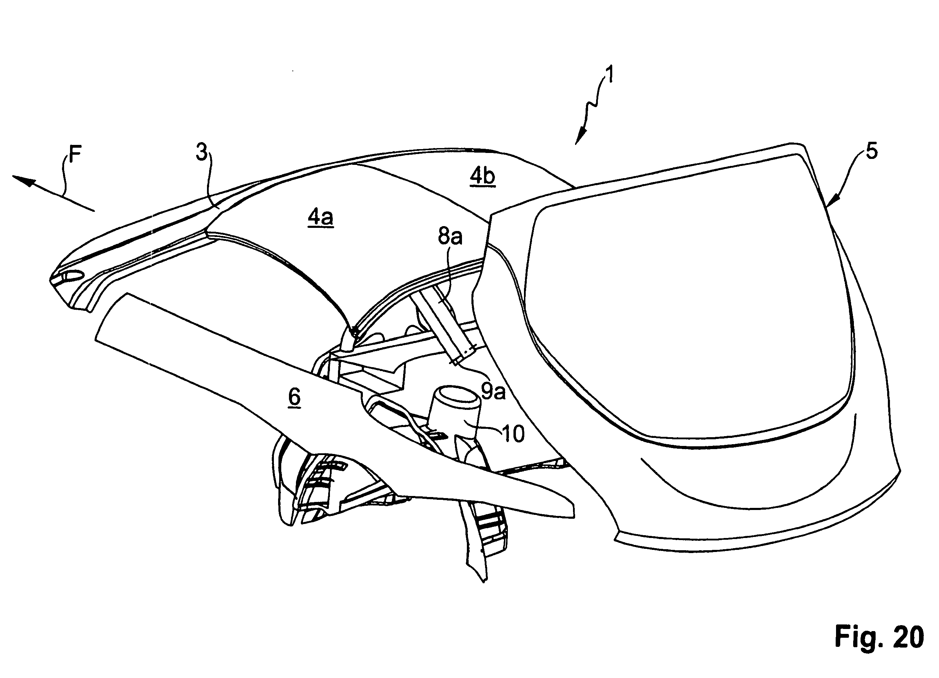

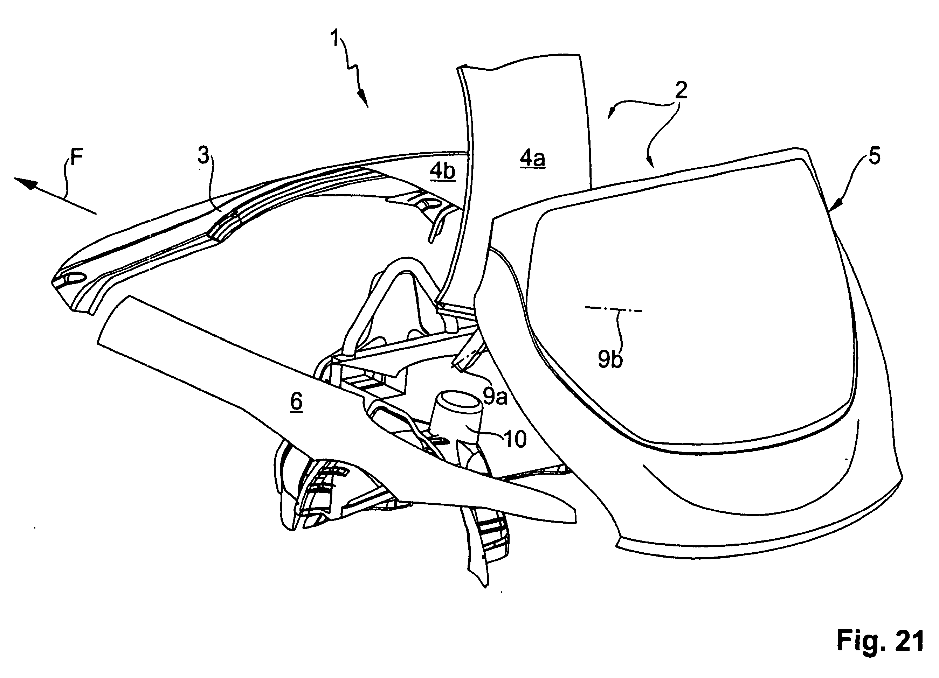

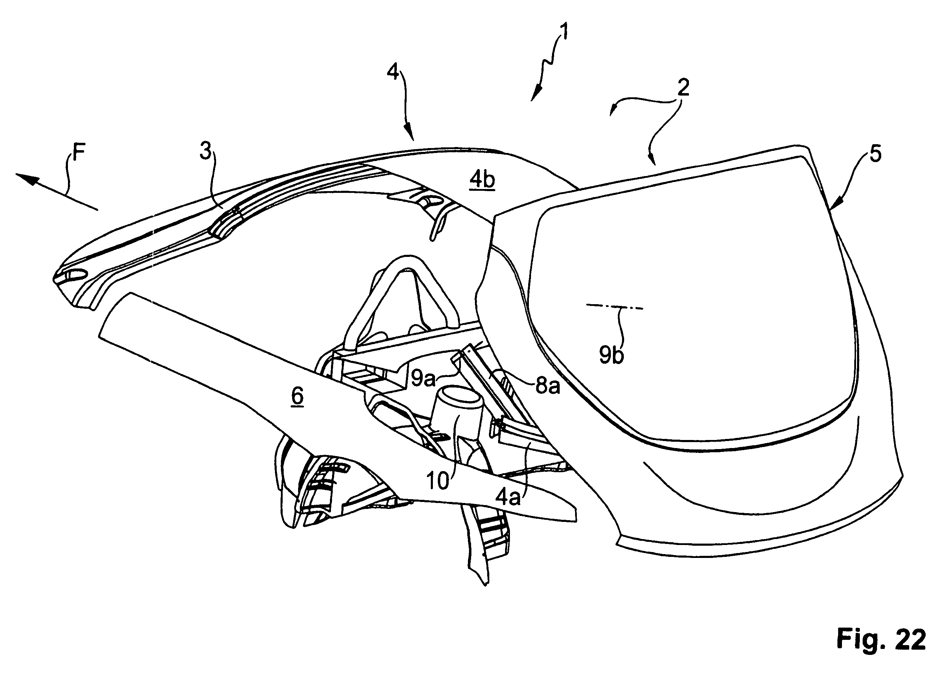

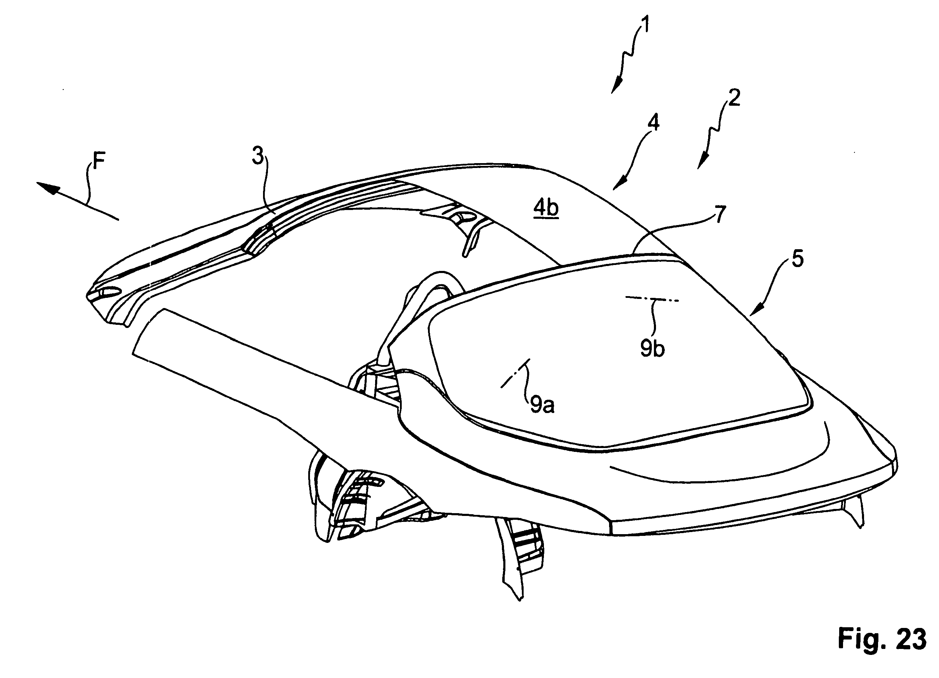

- Fig. 19 bis Fig. 23: eine ähnliche Ansicht wie in den Figuren 1 bis 7, wobei diesmal nur der linke Dachteil in Öffnungsstellung verlagert wird und zusätzlich wie in Fig. 13 bis Fig. 18 ein beweg- liches hinteres Dachsegment eingezeichnet ist,

Das erfindungsgemäße Cabriolet-Fahrzeug 1 ist im hier gezeichneten Ausführungsbeispiel, wie insbesondere in den Figuren 13 bis 23 deutlich wird, mit einem schräg auslaufenden Heck versehen. Auch ein im Wesentlichen steiles Heck mit nur einer kurzen, kaum sichtbaren Stufe, ähnlich wie bei einem Kompaktwagen, kann an einem erfindungsgemäßen Fahrzeug 1 vorgesehen sein.

Ebenso kann das Fahrzeug 1 sowohl ein zweisitzer sein als auch einen größeren Innenraum mit etwa zwei oder mehr Sitzreihen hintereinander aufweisen.

Es umfasst in jedem Fall ein ganz oder teilweise bewegliches Dach 2, das zu seiner Öffnung im rückwärtigen Fahrzeugbereich ablegbar ist. Das in Fahrtrichtung F vordere Ende des Daches 2 ist mit dem Windschutzscheibenrahmen 3 des Fahrzeugs 1 mittelbar oder unmittelbar zur Sicherung der geschlossenen Dachstellung verriegelbar. Das Dach 2 ist insgesamt beweglich an der Karosserie 6 angebunden.

Gemäß der Zeichnung ist das Dach 2 als sog. Retractable Hardtop (RHT) ausgebildet und umfasst hier mehrere in sich starre oder zumindest mit starren Rahmen versehene Dachsegmente 4, 5, die bei geschlossenem Dach 2 aufeinander folgen. Die Anzahl der Dachsegmente kann bei einem längeren Dach 2 erhöht sein.

Hier ist das vordere, in geschlossener Stellung am Windschutzscheibenrahmen 3 gehaltene Dachsegment 4 in sich längs und zumindest ungefähr mittig an einer Fuge geteilt in zwei nebeneinander gelegene Dachteile 4a, 4b. Diese sind beide für sich an der Karosserie 6 beweglich angebunden und im ersten Ausführungsbeispiel gemeinsam zur Dachöffnung in der Karosserie 6 ablegbar. Es ist dabei möglich, dass zum Beispiel nur das vordere Dachsegment nach Art eines Targa-Fahrzeugs abgelegt werden kann, während ein hinteres Dachsegment 5 über den so abgelegten Dachteilen 4a, 4b nach Art eines Deckels geschlossen verbleibt oder nach Ablage der Dachteile 4a, 4b wieder geschlossen wird. Dies wird durch die direkte Anbindung der Dachteile 4a, 4b über die Gestänge an der Karosserie 6 erreicht, ohne dass ein Verschieben der Dachteile 4a, 4b über oder unter ein davor oder dahinter liegendes Dachsegment 5 nötig wäre.

Alternativ könnte auch - nicht gezeichnet - ein hinteres Dachsegment eine Längsteilung aufweisen, wobei dann ein über dem Querverlauf geschlossenes vorderes Dachsegment nach Art eines Deckels darüber gelegt werden könnte.

Ein nicht mittig geteiltes hinteres Dachsegment 5, das an einer Querfuge 7 an das vordere Dachsegment 4 anschließt, ist beispielhaft ab Figur 13 mit eingezeichnet. In den vorderen Figuren ist es zugunsten einer besseren Übersichtlichkeit insbesondere der Kinematik zur Ablage der vorderen Dachteile 4a, 4b nicht eingezeichnet.

Jedes der beiden im geschlossenen Zustand gemäß Figur 1 nebeneinander gelegenen Dachteile 4a, 4b ist an einem einzelnen Gestänge beweglich gegenüber der Karosserie 6 gehalten.

Diese Gestänge umfassen gemäß der Zeichnung jeweils beispielhaft einen karosserieseitig schwenkbeweglich angebundenen Schwenkarm 8a, 8b, hier zum Beispiel ein Kastenprofil, dessen karosseriefeste Schwenkachse 9a, 9b windschief zu einer Karosseriequerachse steht. Die Achsen 9a, 9b können daher sowohl eine Komponente in Fahrtrichtung als auch eine Vertikalkomponente enthalten. Im allgemeinen liegen sie nicht symmetrisch zu einer vertikalen Fahrzeuglängsmittelebene und müssen sich nicht schneiden. Auch wenn sie sich - zum Beispiel außermittig - schneiden, kann durch eine entsprechende Steuerung der kollisionsfreie Öffnungsablauf beider Dachteile 4a, 4b gemäß den Figuren 1 bis 7 mit dem dort dargestellten Vorlaufen eines Dachteils 4a gegenüber dem anderen Dachteil 4b sichergestellt werden.

Hier hat daher jedes Gestänge nur einen Rotationsfreiheitsgrad und stellt damit die einfachste Kinematik zur Dachteilablage dar. Im abgelegten Zustand der Dachteile ist der von diesen eingenommene Raum vollständig freigegeben, ohne dass dort verbleibende Teile, wie etwa Führungsschienen, Rahmenteile, Lenker o. ä., den Luftraum über den Insassen - und damit das Cabriolet-Gefühl- einschränken würden.

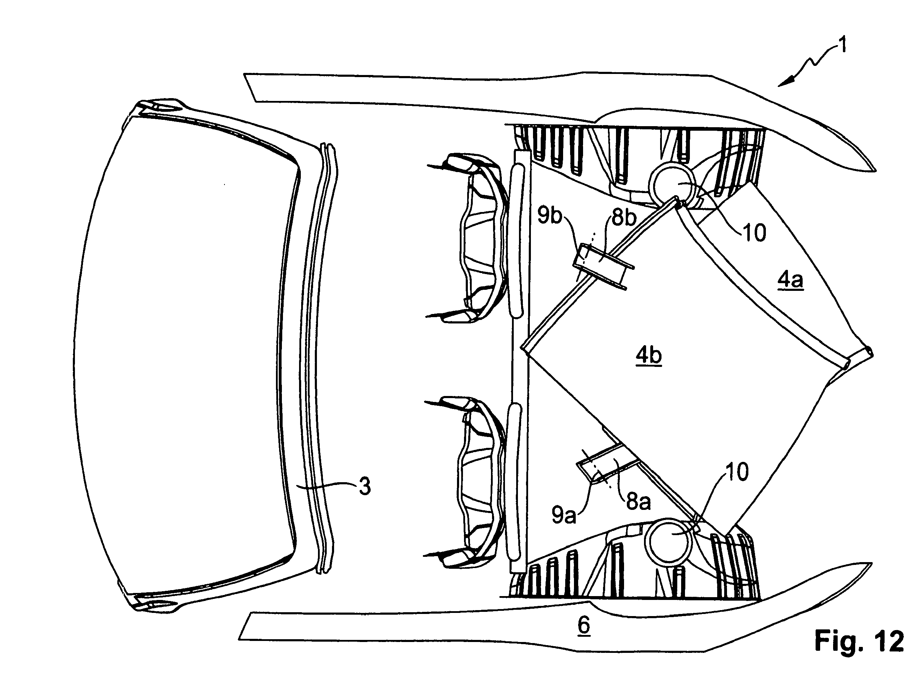

Zumindest eines der Dachteile 4a, 4b - hier beide Dachteile - ist oder sind während seiner oder ihrer Öffnungsbewegung mit einer Komponente in Fahrzeugquerrichtung einwärts verlagerbar, was zu einer besonders Raum sparenden Ablageposition gemäß Fig. 12 führt. Diese Einwärtsverlagerung kann sich beispielsweise durch die Lage der Schwenkachsen 9a, 9b und die zugehörige Schrägstellung der Schwenkarme 8a, 8b im Raum zwangsläufig und ohne weitere Steuerungsmaßnahmen ergeben.

Die Einwärtsverlagerbarkeit der Dachteile 4a, 4b in Fahrzeugquerrichtung stellt einen besonderen Vorteil der Erfindung dar.

Durch die Einwärtsverlagerung ist es nötig, dass beide Dachteile 4a, 4b entweder nacheinander und/oder mit unterschiedlichen Geschwindigkeiten bewegt werden, um eine Kollision der heckwärts gewendeten und dabei quer einwärts bewegten Dachteile 4a, 4b bei ihrer Öffnung zu verhindern. Dies kann zum Beispiel über einen gemeinsamen Antrieb realisiert werden, der für zwei Ausgänge zu den unterschiedlichen Dachteilen verschiedene Übersetzungsverhältnisse zur Verfügung stellt. Auch ist es möglich, dass direkt nur ein Dachteil 4a, 4b angetrieben wird und von dort aus eine Kopplung zum anderen Dachteil führt.

Die Dachteile 4a, 4b können durch die leicht unterschiedlichen Bewegungsabläufe in ihrer geöffneten Stellung in Vertikalrichtung einander zumindest teilweise überlappen und auf diese Weise ein insgesamt gegenüber der geschlossenen Stellung verschmälertes Paket (sh. z. B. Fig. 12) ausbilden.

Durch die hier ausgeprägte Einwärtsverlagerung um die Schwenkachsen 9a, 9b bezüglich einer gedachten Vertikalachse von deutlich mehr als 20° (hier ca. 40°) gelangen die Dachteile 4a, 4b in eine in Draufsicht ungefähr diagonal im Fahrzeug liegende und einander möglichst großflächig überlappende Stellung, bei der sie für eine gute Raumausnutzung beinahe deckungsgleich übereinander - die Dachteile 4a, 4b haben hier jeder für sich eine in Draufsicht annähernd quadratische Umrissgestalt - und ineinander geschachtelt liegen. Der Höhenabstand zwischen den Dachteilen 4a, 4b kann dabei sehr klein sein; zur Abstandssicherung können Pufferelemente vorgesehen sein. Der Bedarf sowohl an Fahrzeugbreite als auch an benötigter Höhe ist durch diese Art der Ablage minimiert. Alternativ zum Einwärtsschwenken wäre beispielsweise auch nur ein Wenden mit einer überlagerten Quereinwärtsverschiebung, zum Beispiel über gesonderte Stellmotoren, eine Spindel o. ä., möglich.

Mit der starken Einwärtsverlagerung können bei der Öffnungsbewegung auch hoch aufragende Federbeindome 10 umgangen werden, so dass eine Ablage der Dachteile 4a, 4b zwischen diesen möglich wird (Fig. 12), was dann bedeutend ist, wenn oberhalb dieser Federbeindome eine Dachteilablage zu hoch über die Fensterbrüstungslinie hinausragen würde.

Die Kinematik zur Bewegung der Dachteile 4a, 4b, hier gebildet durch die um die Achsen 9a, 9b bewegbaren Schwenkarme 8a, 8b bilden insgesamt ein räumliches Getriebe aus, das neben der Heckwärtsverlagerung auch das Einwärtsverschwenken und die Schachtelung der Dachteile 4a, 4b übereinander in einer einzigen Bewegung bewirkt.

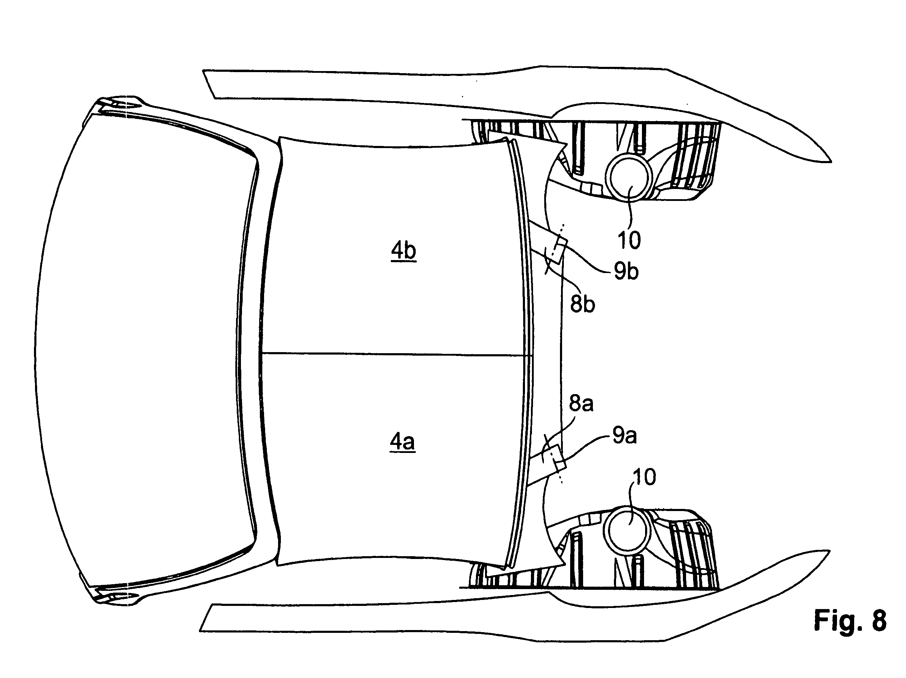

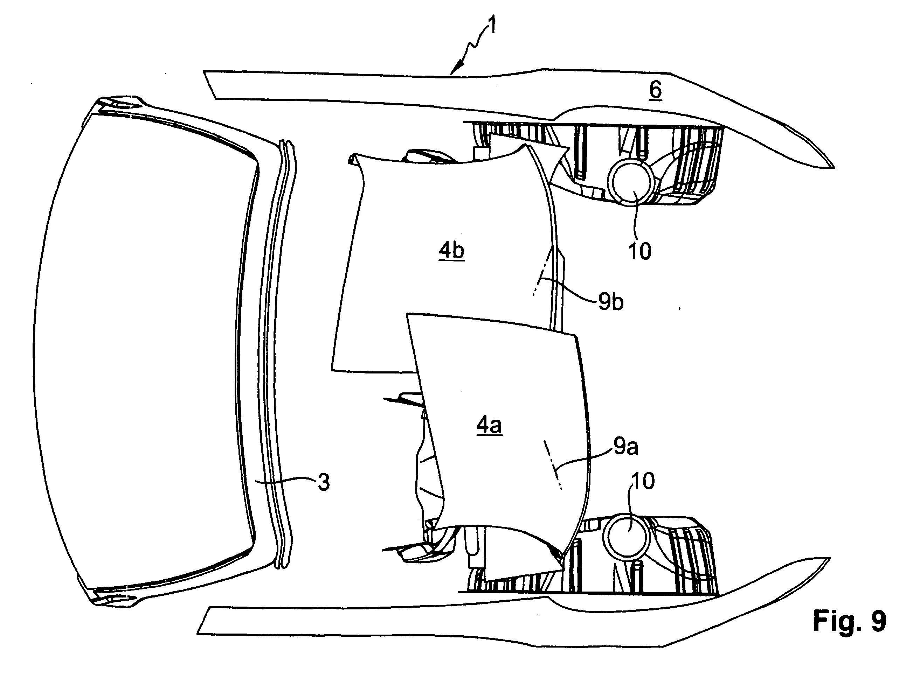

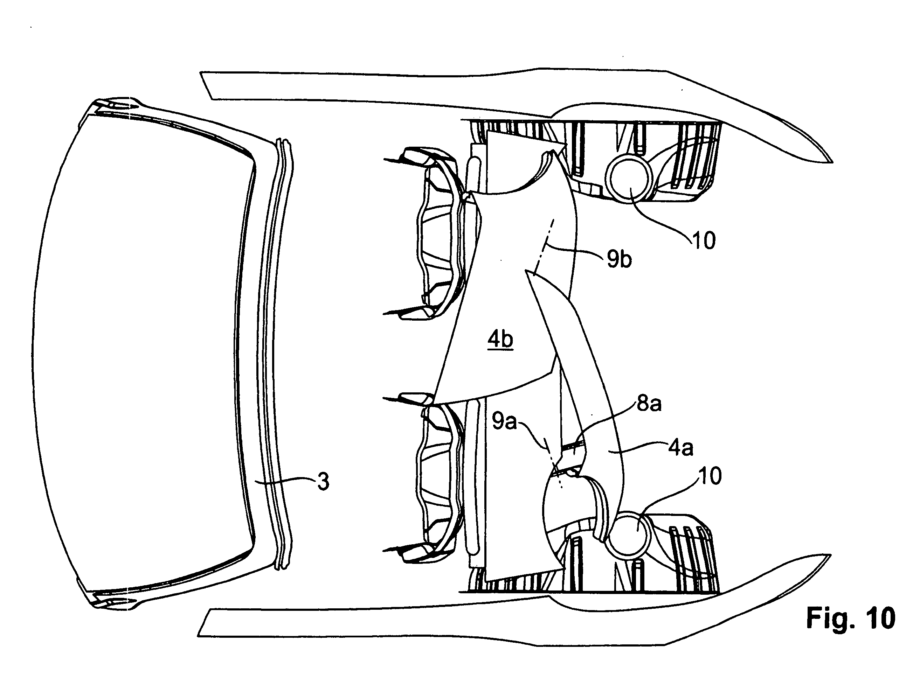

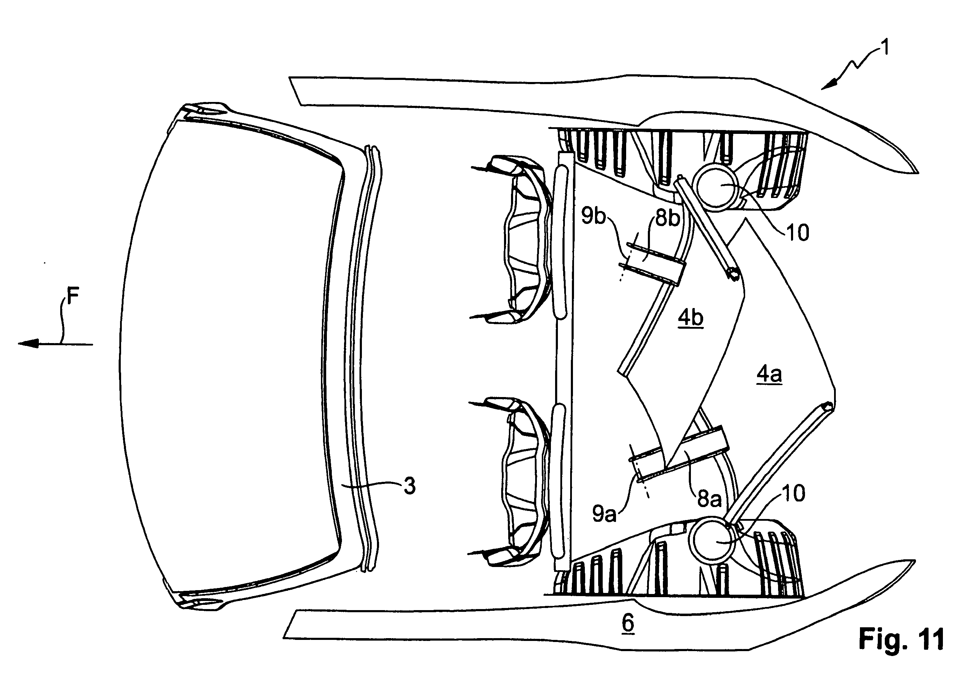

In den Figuren 13 ff. ist dargestellt, dass bei der in Figur 1 bis Figur 12 vorgesehenen Kinematik mit den Schwenkarmen 8a, 8b ein hinteres Dachsegment 5 zunächst aus seiner geschlossenen Stellung heraus (Fig. 13) um beispielsweise eine hintere Querachse aufschwenken kann (Fig. 14), um damit den Raum für das Auf- oder Zubewegen der vorderen Dachteile 4a, 4b freizugeben (Fig. 15, Fig. 16), ehe das hintere Dachsegment 5 über den so gewendet abgelegten vorderen Dachteilen 4a, 4b dann wieder schließen kann (Fig. 17) und dadurch eine Art Targa-Stellung mit einem in gleicher Lage wie bei geschlossenem Dach abgelegten hinteren Dachsegment 5 geschaffen ist. Zusätzlich kann gemäß Fig. 18 hier noch eine Absenkmöglichkeit des hinteren Dachsegments 5 oder zumindest eines wesentlichen Bereichs vorgesehen sein, so dass sich in der Endstellung eine Vollcabriolet-Position des Daches 2 ergibt. Das hintere Dachsegment kann jedoch sehr verschiedenartig ausgebildet sein. Auch können an das längs geteilte Dachsegment 4 nach vorne oder hinten mehrere weitere Dachsegmente anschließen.

Weiter ist in den Figuren 19 bis 23 gezeigt, dass nicht in jedem Fall beide vordere Dachteile 4a, 4b aufschwenken müssen, sondern es kann auch möglich sein, in einer Teilöffnungsstellung nur einen Dachteil - hier den linken 4a - zu öffnen. Dieses Dachteil 4a dichtet zum Beispiel von oben gegen das andere Dachteil 4b und kann daher nach oben aufgeschwenkt werden, ohne dass das weitere Dachteil 4b mit angehoben werden müsste. Damit ist eine Dachöffnung zum Beispiel nur oberhalb des Fahrers möglich, während der Beifahrer geschützt unter dem geschlossenen Dachteil 4b verbleiben kann. Auch der umgekehrte Fall ist - zum Beispiel auch für den Transport von langen Gegenständen wie etwa Weihnachtsbäumen - möglich.

## Patentansprüche

1. Cabriolet-Fahrzeug (1) mit einem beweglichen Dach (2), das zumindest ein bewegliches Dachsegment (4;5) umfasst, wobei zumindest eines der Dachsegmente (4) an einer Längsfuge geteilt ist in zwei quer zueinander benachbarte Dachteile (4a;4b), und wobei zumindest ein Dachteil (4a;4b) während seiner Öffnungsbewegung mit einer Komponente in Fahrzeugquerrichtung einwärts verlagerbar ist,
**dadurch gekennzeichnet,**
**dass** ein Gestänge für jeweils einen Dachteil (4a;4b) einen karosserieseitig schwenkbeweglich angebundenen Schwenkarm (8a;8b) umfasst, deren Schwenkachsen (9a;9b) windschief zu einer Karosseriequerachse stehen und nicht symmetrisch zu einer vertikalen Fahrzeuglängamittelebene liegen.

2. Cabriolet-Fahrzeug (1) nach Anspruch 1,
**dadurch gekennzeichnet,**
**dass** die beiden Dachteile (4a;4b) eines Dachsegments (4) in ihrem Öffnungszustand den von dem geschlossenen Dachteil eingenommenen Raum vollständig und ohne Zurücklassen eines Längsträgers, einer Führungsschiene oder dergleichen vollständig freigeben.

3. Cabriolet-Fahrzeug (1) nach Anspruch 1,
**dadurch gekennzeichnet,**
**dass** das Dach (2) mehrere im geschlossenen Zustand hintereinander folgende und an zumindest einer Querfuge (7) voneinander geteilte Dachsegmente (4;5) umfasst.

4. Cabriolet-Fahrzeug (1) nach einem der Ansprüche 1 bis 3,
**dadurch gekennzeichnet,**
**dass** die Teilung an der Längsfuge zumindest nahezu mittig liegt und beide Dachteile (4a;4b) ungefähr gleichgroß sind.

5. Cabriolet-Fahrzeug (1) nach einem der Ansprüche 1 bis 4,
**dadurch gekennzeichnet,**
**dass** die Dachteile (4a,4b) in ihrer geöffneten Stellung in Vertikalrichtung einander zumindest teilweise überlappend ablegbar sind.

6. Cabriolet-Fahrzeug (1) nach Anspruch 5,
**dadurch gekennzeichnet,**
**dass** die Dachteile (4a;4b) ineinander geschachtelt ablegbar sind.

7. Cabriolet-Fahrzeug (1) nach einem der Ansprüche 1 bis 6,
**dadurch gekennzeichnet,**
**dass** die Dachteile (4a;4b) bei ihrer Öffnung um eine Vertikalachse um zumindest 20° einwärts schwenkbar sind.

8. Cabriolet-Fahrzeug (1) nach einem der Ansprüche 1 bis 7,
**dadurch gekennzeichnet,**
**dass** die Bewegungen beider Dachteile (4a;4b) zwangsweise oder über eine Steuerung kollisionsverhindernd aufeinander abgestimmt sind.

9. Cabriolet-Fahrzeug (1) nach einem der Ansprüche 1 bis 8,
**dadurch gekennzeichnet,**
**dass** zumindest eines der Dachteile (4a;4b) einzeln aufbeweglich ist.

10. Cabriolet-Fahrzeug (1) nach einem der Ansprüche 1 bis 9,
**dadurch gekennzeichnet,**
**dass** die Kinematik zur Bewegung der Dachteile (4a;4b) insgesamt ein räumliches Getriebe ausbildet.

## Claims

1. A convertible vehicle (1) with a movable roof (2), said roof (2) comprising at least one movable roof segment (4; 5), at least one of said roof segments (4) being divided at a longitudinal joint into two transversely adjacent roof parts (4a; 4b), and at least one of said roof parts (4a; 4b) being inwardly displaceable, during its opening movement, with a component in the transverse vehicle direction,
**characterised in that** a linkage for one respective roof part (4a; 4b) comprises a pivoting arm (8a; 8b) attached to the vehicle body in a pivoting manner, whose pivoting axes (9a; 9b) are skewed with respect to a transverse vehicle body axis and are not located symmetrically with respect to a vertical median longitudinal vehicle plane.

2. The convertible vehicle (1) according to claim 1, **characterised in that** both roof parts (4a; 4b) of a roof segment (4), in their opened condition, completely expose the space occupied by the closed roof part and do not leave a longitudinal beam, a guide rail or the like behind.

3. The convertible vehicle (1) according to claim 1, **characterised in that** the roof (2) comprises a plurality of roof segments (4; 5) arranged in sequence in the closed condition and divided at at least one transverse joint (7).

4. The convertible vehicle (1) according to any one of claims 1 to 3, **characterised in that** the division at the longitudinal joint is at least approximately central and that both roof parts (4a; 4b) are approximately the same size.

5. The convertible vehicle (1) according to any one of claims 1 to 4, **characterised in that** the roof parts (4a, 4b) can be stowed, in their open position, with at least a partial mutual overlap in a vertical direction.

6. The convertible vehicle (1) according to claim 5, **characterised in that** the roof parts (4a; 4b) can be stowed in a mutually nested manner.

7. The convertible vehicle (1) according to any one of claims 1 to 6, **characterised in that** the roof parts (4a; 4b) can be pivoted inwardly by at least 20° about a vertical axis when being opened.

8. The convertible vehicle (1) according to any one of claims 1 to 7, **characterised in that** anti-collision synchronisation of the movements of both roof parts (4a; 4b) is achieved by force or by control.

9. The convertible vehicle (1) according to any one of claims 1 to 8, **characterised in that** at least one of the roof parts (4a; 4b) can be opened individually.

10. The convertible vehicle (1) according to any one of claims 1 to 9, **characterised in that** the kinematic mechanism for moving the roof parts (4a; 4b) forms a spatial transmission on the whole.

## Revendications

1. Véhicule cabriolet (1) avec un toit déplaçable (2), ce toit (2) comprenant au moins un segment de toit déplaçable (4; 5), au moins un desdits segments de toit (4) étant divisé, selon un joint longitudinal, en deux éléments de toit (4a; 4b) adjacents en direction transversale, et au moins un desdits éléments de toit (4a; 4b) étant déplaçable vers l'intérieur, pendant son mouvement d'ouverture, avec une composante en direction transversale du véhicule,
**caractérisé en ce qu'**une tringlerie respective pour chaque élément de toit (4a; 4b) comprend un bras pivotant (8a; 8b) relié à la carrosserie de manière à pouvoir pivoter et dont les axes de pivotement (9a; 9b) sont inclinés par rapport à un axe transversale de la carrosserie et ne sont pas disposés de manière symétrique par rapport à un plan longitudinal médian vertical du véhicule.

2. Véhicule cabriolet (1) selon la revendication 1, **caractérisé en ce que** les deux éléments de toit (4a; 4b) d'un segment de toit (4), en leur état ouvert, libèrent complètement l'espace occupé par l'élément de toit fermé et n'y laissent pas de longeron, de rail de guidage ou similaire.

3. Véhicule cabriolet (1) selon la revendication 1, **caractérisé en ce que** le toit (2) comprend plusieurs segments de toit (4; 5) disposés l'un derrière l'autre en état fermé et divisés les uns des autres selon au moins un joint transversal (7).

4. Véhicule cabriolet (1) selon l'une quelconque des revendications 1 à 3, **caractérisé en ce que** la division selon le joint longitudinal est au moins environ au milieu et **en ce que** tous les deux éléments de toit (4a; 4b) sont de taille environ identique.

5. Véhicule cabriolet (1) selon l'une quelconque des revendications 1 à 4, **caractérisé en ce que** les éléments de toit (4a, 4b), en position ouverte, sont escamotables à chevauchement au moins partiel en direction verticale.

6. Véhicule cabriolet (1) selon la revendication 5, **caractérisé en ce que** les éléments de toit (4a; 4b) sont escamotables de sorte que l'un soit imbriqué dans l'autre.

7. Véhicule cabriolet (1) selon l'une quelconque des revendications 1 à 6, **caractérisé en ce que** l'on peut pivoter les éléments de toit (4a; 4b) vers l'intérieur par au moins 20° autour d'un axe vertical lors de leur ouverture.

8. Véhicule cabriolet (1) selon l'une quelconque des revendications 1 à 7, **caractérisé en ce que** l'on peut harmoniser les déplacements des deux éléments de toit (4a; 4b), par force ou par une commande, de manière à éviter une collision.

9. Véhicule cabriolet (1) selon l'une quelconque des revendications 1 à 8, **caractérisé en ce que** l'on peut ouvrir individuellement au moins l'un des éléments de toit (4a; 4b).

10. Véhicule cabriolet (1) selon l'une quelconque des revendications 1 à 9, **caractérisé en ce que** le mécanisme cinématique pour le déplacement des éléments de toit (4a; 4b) constitue dans son ensemble une chaîne cinématique spatiale.
